# EUROPÄISCHE PATENTSCHRIFT

(11) **EP 0 847 127 B1**
(45) Veröffentlichungstag und Bekanntmachung des Hinweises auf die Patenterteilung: **15.03.2000**
(21) Anmeldenummer: 97810696.1
(22) Anmeldetag: 22.09.1997
(51) Int. Cl.: H02K 7/116, H02K 5/24, F16F 3/093, F16F 1/42, F16F 1/32, B60S 1/08

(54) **Elektroantrieb**
Electric drive
Entraînement électrique

(30) Priorität: 06.11.1996 CH 273796
(43) Veröffentlichungstag der Anmeldung: 10.06.1998
(73) Patentinhaber: SAIA-Burgess Electronics AG, CH-3280 Murten (CH)
(72) Erfinder: Gilliéron, Christian, 3280 Murten (CH)
(74) Vertreter: AMMANN PATENTANWAELTE AG BERN

(56) Entgegenhaltungen:
- DE-A- 3 837 758
- GB-A- 2 060 816
- US-A- 5 102 090

## Beschreibung

Die Erfindung betrifft einen Elektroantrieb gemäss dem Oberbegriff des Patentanspruchs 1. Derartige Elektroantriebe umfassen im Allgemeinen einen Motorenteil und einen Getriebeteil und werden zum Beispiel in der Automobilindustrie (bei Klimaanlagen, Türschlössern, Türfenstern usw.) verwendet.

Solche Elektroantriebe müssen einerseits genügend steif und sicher befestigt werden, aber andererseits sollte auch eine Dämpfung von möglicherweise auftretenden Resonanzen gewährleistet sein, damit keine störenden Geräusche oder sogar Beschädigungen entstehen.

Aus der Schrift US-A-5,102,090 ist eine Befestigungskonstruktion für einen Elektromotor bekannt, der in einer Fahrzeugtür zur Betätigung einer Fensterscheibe dient. Die Befestigung des Elektromotors erfolgt über eine scheibenförmige Halteplatte mit drei sternförmig miteinander verbundenen Armen, welche mit ihren elastisch biegsamen Enden in Halteschlitze eingeschnappt sind, die im Türrahmen enthalten sind.

Aus der Schrift GB-A-2 060 816 ist ein Schwingungsisolator bekannt, der einen Aussenteil und einen Innenteil aus einem härteren thermoplastischen Polymer und einen Zwischenteil aus einem weicheren thermoplastischen Elastomer enthält.

Der Erfindung liegt die Aufgabe zugrunde, einen gattungsgemässen Elektroantrieb zu schaffen, welcher unter Vermeidung von unerwünschten Resonanzen zuverlässig befestigt werden kann.

Erfindungsgemäss wird dies durch die Merkmale des kennzeichnenden Teils des Patentanspruchs 1 erreicht. Die Gestaltung der federnden Stegkonstruktion und die Auswahl der Härte der beiden verwendeten Kunststoffe ermöglichen es, unter Beibehaltung einer ausreichenden Steifigkeit störende Resonanzen bei den Befestigungsstellen zu vermeiden.

Weitere vorteilhafte Ausführungsformen gehen aus den Unteransprüchen hervor.

Nachfolgend wird eine beispielsweise Ausführungsform der Erfindung an Hand der Zeichnung näher erläutert. Es zeigen:
- Fig. 1: eine schematische Draufsicht eines Gehäuseteils aus einem ersten Kunststoff,
- Fig. 2: eine perspektivische Ansicht des Gehäuseteils der Figur 1 nach dem Hinzufügen des zweiten Kunststoffs, und
- Fig. 3: eine perspektivische Ansicht des Elektroantriebs.

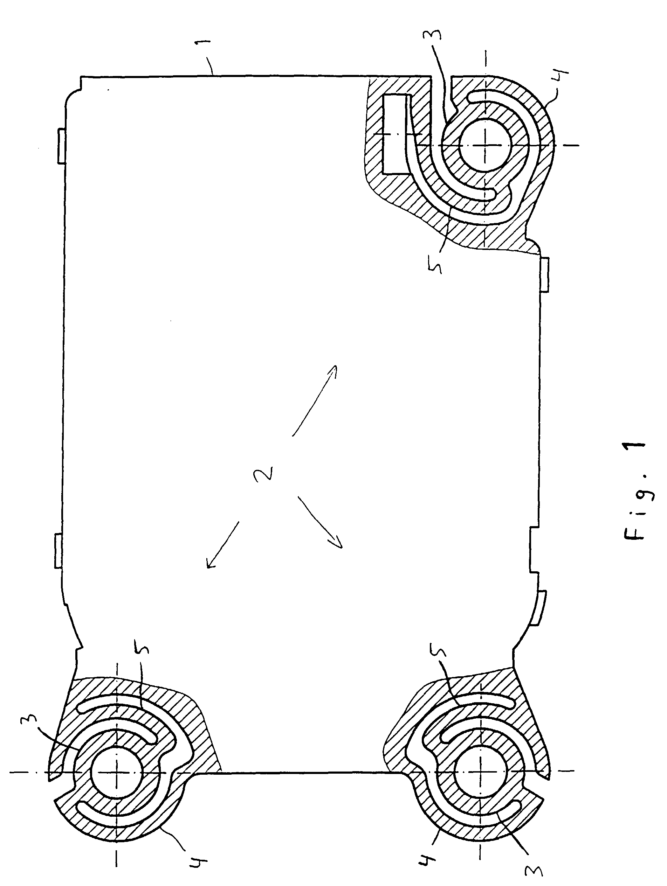

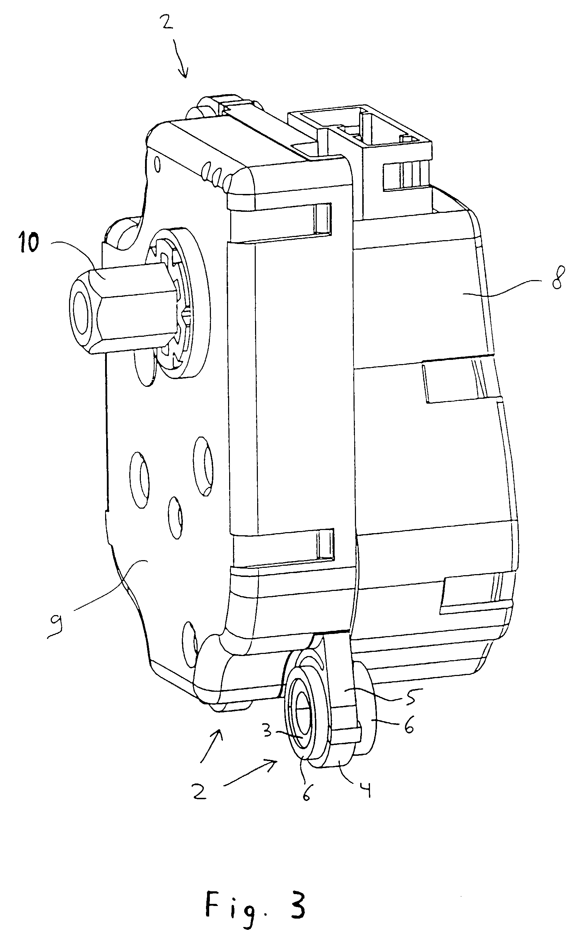

In der Figur 1 ist, etwa sechsmal vergrössert, eine schematische Draufsicht eines Gehäuseteils aus einem ersten Kunststoff wiedergegeben. Dieser Gehäuseteil bildet zum Beispiel eine Trennwand zwischen einem Motorenteil und einem Getriebeteil des Elektroantriebs, wie im Folgenden anhand der Figur 3 näher erläutert wird. Der Gehäuseteil ist im Wesentlichen plattenförmig ausgeführt und mit einigen nicht gezeigten Durchgangslöchern versehen, die für die Erfindung nicht von Bedeutung sind. Der plattenförmige Teil 1 weist drei Befestigungsstellen 2 für den Elektroantrieb auf. Natürlich kann auch eine andere Anzahl von Befestigungsstellen (beispielsweise vier) vorgesehen sein. Auch können diese Befestigungsstellen 2 anderswo am Gehäuse des Elektroantriebs angeordnet sein.

Der Gehäuseteil ist in Figur 1 noch nicht fertig gestellt. Zuerst wird der Gehäuseteil gemäss Figur 1 in einem Spritzgussverfahren hergestellt aus einem ersten Kunststoff, wie zum Beispiel einem haftungsmodifizierten Polyamid. Die Befestigungsstellen 2 weisen jeweils eine federnde Stegkonstruktion auf, welche einen ringförmig ausgeführten Mittelsteg 3 umfasst. Dieser Mittelsteg 3 ist mittels zweier etwa diametral daran befestigter Verbindungsstege 4, 5 federnd mit dem Gehäuseteil verbunden. Die Verbindungsstege 4, 5 sind beispielsweise kreisringsektorförmig ausgebildet. Der Mittelsteg 3, und somit der Elektroantrieb, kann mittels Schrauben an seiner Umgebung befestigt werden.

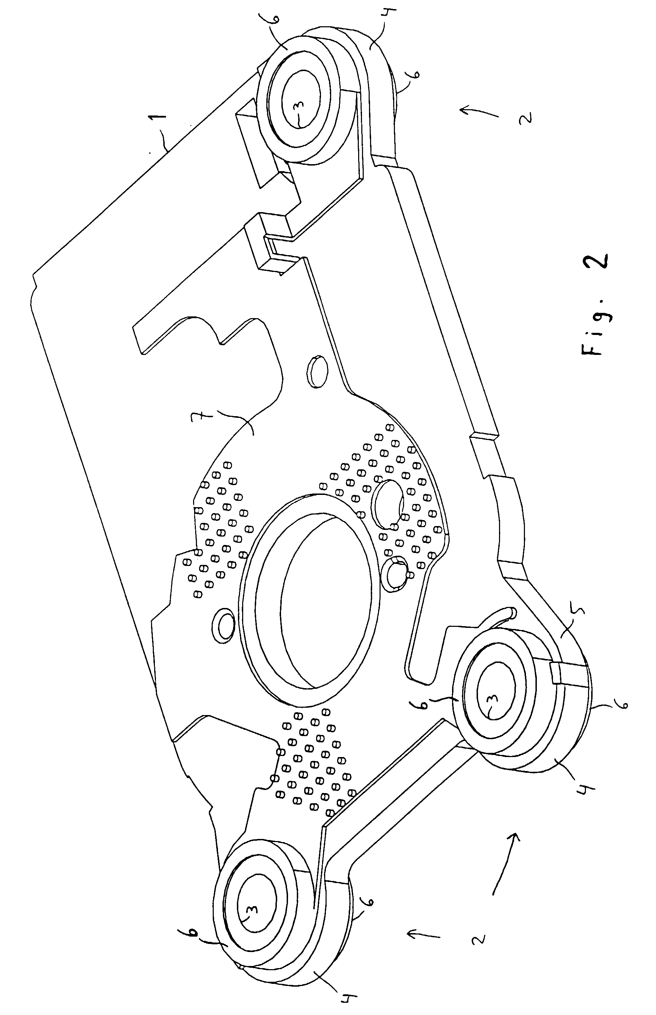

In einem zweiten Spritzgussverfahren wird dann ein zweiter Kunststoff aufgespritzt. Die Figur 2 zeigt eine perspektivische Ansicht des Gehäuseteils der Figur 1 nach dem Hinzufügen des zweiten Kunststoffs. Die federnde Stegkonstruktion aus dem ersten Kunststoff ist zur Erhöhung der Federsteifigkeit und somit zur Dämpfung teilweise vom zweiten Kunststoff umgeben. Dieser zweite Kunststoff, der weicher ist als der erste, ist beispielsweise ein thermoplastisches Elastomer. Die Befestigungsstellen 2 sind also in einem Zweikomponenten-Spritzgussverfahren hergestellt.

Der zweite Kunststoff wird zwischen den Mittelsteg 3 und die Verbindungsstege 4, 5 sowie zwischen den Verbindungssteg 5 und den plattenförmigen Teil 1 des Gehäuseteils eingespritzt. Die Verbindungsstellen zwischen dem Mittelsteg 3 und den Verbindungsstegen 4, 5 werden vom zweiten Kunststoff umspritzt, und es wird ein im Wesentlichen zylinderförmiger Dämpfungsteil 6 um den Mittelsteg 3 herum gebildet, der sowohl oben als unten vorsteht. Zudem können im gleichen Spritzvorgang aus dem zweiten Kunststoff weitere erforderliche Teile, wie zum Beispiel eine Gummimatte 7, gefertigt werden. Das Versteifen der Stegkonstruktion 3, 4, 5 mit dem zweiten Kunststoff beeinflusst die Federkonstante der Befestigungsstellen 2.

Der Mittelsteg 3 bildet eine Kontaktfläche der Befestigungsstelle 2 zur Umgebung. Der Dämpfungsteil 6 aus dem zweiten, weicheren Kunststoff ist oben und unten frei und bildet daher keine Kontaktfläche der Befestigungsstelle 2. Nach dem Festschrauben des Elektroantriebs ist dieser somit durch die vom zweiten Kunststoff gedämpfte und versteifte, aus dem ersten Kunststoff geformte Stegkonstruktion 3, 4, 5 federnd befestigt.

Die Dicke und die Länge der Stege der federnden Stegkonstruktion 3, 4, 5 sowie die Härte der beiden verwendeten Kunststoffe ist derart gewählt, dass die Resonanzfrequenzen der Befestigungsstellen 2 im Wesentlichen bis ausserhalb eines gegebenen Frequenzintervalls (eines wählbaren Frequenzbereichs, in welchem Resonanzen unerwünscht sind) verschoben sind. Diese Parameter sind vom Fachmann einfach (zum Beispiel durch "trial and error") zu ermitteln. So kann beispielsweise vorteilhaft ein Elastomer mit einer Shore-A-Härte von 30 - 60 als zweiter Kunststoff verwendet werden.

In der Figur 3 ist eine perspektivische Ansicht des Elektroantriebs wiedergegeben. Sein Gehäuse umfasst einen Motordeckel 8 für den Motorenteil und einen Getriebedeckel 9 für den Getriebeteil. Eine vom Motorenteil antreibbare Welle 10 ragt durch den Getriebedeckel 9 hindurch. Die (im gezeigten Beispiel: drei) Befestigungsstellen 2 des Elektroantriebs ermöglichen eine in einem ausgewählten Frequenzbereich nahezu resonanzfreie Befestigung desselben.

## Patentansprüche

1. Elektroantrieb mit einem Gehäuse, welches einen Gehäuseteil enthält, welcher mit mindestens einer Befestigungsstelle versehen ist, die eine federnde Stegkonstruktion (3, 4, 5) aufweist, wobei der Gehäuseteil (1) und die federnde Stegkonstruktion (3, 4, 5) ein einstückiges Element bilden,
dadurch gekennzeichnet, dass die federnde Stegkonstruktion (3, 4, 5) aus einem ersten Kunststoff besteht und einen Mittelsteg (3) und Verbindungsstege (4, 5) enthält, welche den Mittelsteg (3) mit dem Gehäuseteil (1) verbinden,
und dass die Stegkonstruktion (3, 4, 5) zur Dämpfung von Resonanzschwingungen teilweise von einem zweiten Kunststoff (6) umgeben ist.

2. Elektroantrieb nach Anspruch 1, dadurch gekennzeichnet, dass der erste Kunststoff härter als der zweite Kunststoff ist und insbesondere ein haftungsmodifiziertes Polymer ist.

3. Elektroantrieb nach Anspruch 1 oder 2, dadurch gekennzeichnet, dass der zweite Kunststoff weicher als der erste Kunststoff ist und insbesondere ein thermoplastisches Elastomer ist.

4. Elektroantrieb nach einem der Ansprüche 1 bis 3, dadurch gekennzeichnet, dass die mindestens eine Befestigungsstelle (2) in einem Zweikomponenten-Spritzgussverfahren hergestellt ist.

5. Elektroantrieb nach einem der Ansprüche 1 bis 4, dadurch gekennzeichnet, dass die Verbindungsstege (4, 5) an entgegengesetzten Stellen des Mittelsteges (3) angeschlossen sind.

6. Elektroantrieb nach Anspruch 5, dadurch gekennzeichnet, dass der Mittelsteg (3) ringförmig ausgeführt ist.

7. Elektroantrieb nach einem der Ansprüche 5 und 6, dadurch gekennzeichnet, dass die Verbindungsstege (4, 5) im Wesentlichen kreisringsektorförmig ausgebildet sind.

8. Elektroantrieb nach einem der Ansprüche 5 bis 7, dadurch gekennzeichnet, dass der Mittelsteg (3) eine Kontaktfläche der Befestigungsstelle (2) bildet.

9. Elektroantrieb nach einem der Ansprüche 1 bis 8, dadurch gekennzeichnet, dass das Gehäuse drei oder vier Befestigungsstellen (2) aufweist.

10. Elektroantrieb nach einem der Ansprüche 1 bis 9, dadurch gekennzeichnet, dass die Dicke und die Länge der Stege der federnden Stegkonstruktion (3, 4, 5) sowie die Härte der verwendeten Kunststoffe derart gewählt sind, dass sich die Resonanzfrequenzen der Befestigungsstelle(n) (2) im Wesentlichen ausserhalb eines gegebenen Frequenzintervalls befinden.

## Claims

1. Electric drive with a housing having a housing part provided with at least one fastening point comprising a elastic web construction (3, 4, 5), the housing part (1) and the elastic web construction (3, 4, 5) forming an integral element,
characterised in that
the elastic web construction (3, 4, 5) consists of a first synthetic material and comprises a central web (3) and connecting webs (4, 5) which connect the central web (3) to the housing part (1),
and in that the web construction (3, 4, 5) is partially surrounded by a second synthetic material (6) in order to damp resonances.

2. Electric drive according to claim 1, characterised in that the first synthetic material is harder than the second synthetic material, and more particularly, that it is an adhesion modified polymer.

3. Electric drive according to claim 1 or 2, characterised in that the second synthetic material is softer than the first synthetic material, and more particularly, that it is a thermoplastic elastomer.

4. Electric drive according to one of claims 1 to 3, characterised in that the fastening point or points respectively is or are produced in a two-component injection-moulding process.

5. Electric drive according to one of claims 1 to 4, characterised in that the connecting webs (4, 5) are connected at opposed locations of the central web (3).

6. Electric drive according to claim 5, characterised in that the central web (3) is annularly shaped.

7. Electric drive according to one of claims 5 or 6, characterised in that the connecting webs (4, 5) are essentially shaped as circular ring sectors.

8. Electric drive according to one of claims 5 to 7, characterised in that the central web (3) forms a contact surface of the fastening point (2).

9. Electric drive according to one of claims 1 to 8, characterised in that the housing includes three or four fastening points (2).

10. Electric drive according to one of claims 5 to 9, characterised in that the thickness and length of the webs of the elastic web construction (3, 4, 5) as well as the hardness of the used synthetic materials are chosen such that the resonance frequencies of the fastening point(s) (2) lie(s) essentially outside a given frequency interval.

## Revendications

1. Entraînement électrique avec un boîtier comprenant une pièce de boîtier pourvue d'au moins un élément de fixation comprenant une construction à ponts élastiques (3, 4, 5), ladite pièce de boîtier (1) et la construction à ponts élastiques (3, 4, 5) formant un élément venu d'une pièce,
caractérisé en ce que
la construction à ponts élastiques (3, 4, 5) consiste en une première matière plastique et comporte un pont central (3) et des ponts de connexion (4, 5) reliant ledit pont central (3) à ladite pièce de boîtier (1),
et que la construction à ponts (3, 4, 5) est partiellement enveloppée par une deuxième matière plastique (6) afin d'amortir des résonances.

2. Entraînement électrique selon la revendication 1, caractérisé en ce que la première matière plastique est plus dure que la deuxième matière plastique, et plus particulièrement, qu'il s'agit d'un polymère à adhésion modifiée.

3. Entraînement électrique selon la revendication 1 ou 2, caractérisé en ce la deuxième matière plastique est plus souple que la première matière plastique, et plus particulièrement, qu'il s'agit d'un élastomère thermoplastique.

4. Entraînement électrique selon l'une des revendications 1 à 3, caractérisé en ce que le ou les élément(s) de fixation (2) est produit/sont produits selon un procédé de moulage par injection de deux composantes.

5. Entraînement électrique selon l'une des revendications 1 à 4, caractérisé en ce que les ponts de connexion (4, 5) sont attachés à des points opposés du pont central (3).

6. Entraînement électrique selon la revendication 5, caractérisé en ce que le pont central (3) présente une configuration annulaire.

7. Entraînement électrique selon l'une des revendications 5 et 6, caractérisé en ce que les ponts de connexion (4, 5) sont réalisés en forme de secteurs de cercle essentiellement.

8. Entraînement électrique selon l'une des revendications 1 à 8, caractérisé en ce que le pont central (3) forme une surface de contact de l'élément de fixation (2).

9. Entraînement électrique selon l'une des revendications 1 à 8, caractérisé en ce que le boîtier comporte trois ou quatre éléments de fixation (2).

10. Entraînement électrique selon l'une des revendications 1 à 9, caractérisé en ce que l'épaisseur et la longueur des ponts de la construction à ponts élastiques (3, 4, 5) ainsi que la dureté des matières plastiques utilisées sont choisies de telle manière que les fréquences de résonance de l'élément ou des éléments de fixation (2) se trouvent essentiellement à l'extérieur d'un intervalle de fréquences donné.
